# EUROPÄISCHE PATENTSCHRIFT

(11) **EP 2 468 176 B1**
(45) Veröffentlichungstag und Bekanntmachung des Hinweises auf die Patenterteilung: **31.03.2021**
(21) Anmeldenummer: 11192930.3
(22) Anmeldetag: 12.12.2011
(51) Int. Cl.: B60R 25/31, B60K 37/02

(54) **Verfahren zur Ausgabe von Informationen**
Information output method
Procédé d'émission d'informations

(30) Priorität: 23.12.2010 DE 102010055795
(43) Veröffentlichungstag der Anmeldung: 27.06.2012
(73) Patentinhaber: Continental Automotive GmbH, 30165 Hannover (DE)
(72) Erfinder: Cieler, Stephan, 60316 Frankfurt (DE); Lübbert, Katrin, 64289 Darmstadt (DE); Meier-Arendt, Guido, 63225 Langen (DE); Niemeyer, Alexander, 64832 Babenhausen (DE); Solterbeck, Carmen, 60596 Frankfurt (DE)
(74) Vertreter: Continental Corporation

(56) Entgegenhaltungen:
- EP-A2- 0 924 123
- WO-A1-2008/147036
- DE-A1-102004 017 835
- DE-A1-102004 021 322
- DE-A1-102007 023 140
- US-A1- 2006 238 321
- US-B2- 6 498 970
- US-B2- 7 570 155

## Beschreibung

Die Erfindung bezieht sich auf ein Verfahren zur Ausgabe von Informationen durch eine Ausgabeeinheit im Fahrgastraum eines Kraftfahrzeugs in Abhängigkeit von erfassbaren Personendaten, wobei nach einer Aktivierung eines Annäherungsmoduls eine Personenerkennung ausgelöst wird, bei der Personendaten einer sich außerhalb des Kraftfahrzeugs befindlichen Person durch eine Umfeldsensorik erfasst und mit gespeicherten Personendaten verglichen werden, und dass bei Übereinstimmung der erfassten Personendaten mit gespeicherten Personendaten eine Ausgabe von Bildinformationen durch die Ausgabeeinheit ausgelöst wird, die sich auf die Person beziehen.

Aus der DE 698 36 846 T2 ist ein in einem Kraftfahrzeug eingebautes Gerät bekannt, das eine Ausgabeeinheit in Form eines Displays oder eines Lautsprechers aufweist. In einem Speicher sind Personendaten mehrerer Personen gespeichert.

Diese Personendaten können von dem Fahrer des Kraftfahrzeugs zum Zwecke einer Kommunikation mit einer Person aufgerufen werden, deren Personendaten gespeichert sind.

Zur Kommunikation kann eine Kamera Fotos des Innen- und des Außenraums der Kraftfahrzeugs aufnehmen.

Auf dem Display sind Bilder der aufgerufenen Person sowie der durch die Kamera aufgenommene Fotos darstellbar.

Aus der US 2006/238321 A1 ist ein Fahrzeugsicherheitssystem der eingangs genannten Art bekannt, das eine Mehrzahl von Erkennungssensoren aufweist, durch die Erkennungssignale von außerhalb des Fahrzeugs erfaßbar sind. Die Erkennungssignale werden im Fahrzeug in einem Computersystem mit vorab darin gespeicherten Daten eines autorisierten Benutzers des Fahrzeugs verglichen. Wenn die Erkennungssignale mit den gespeicherten Daten übereinstimmen, identifiziert das System die Person als einen autorisierten Benutzer und erlaubt es der Person in das Fahrzeug einzusteigen und zu starten. Stimmen die Erkennungssignale nicht mit den gespeicherten Daten überein, so wird sofort ein Alarm ausgelöst und Alarminformationen an einen vorbestimmten Empfänger gesendet. Eine Anzeige der Alarminformationen kann durch eine Videoausgabevorrichtung wie eine hochauflösende Anzeige erfolgen.

Aus der DE10 2004 017 835 A1 ist ein Diebstahlsicherungssystem an einem Fahrzeug bekannt, das eine Umgebungsüberwachungseinheit zur Überwachung der Umgebung des Fahrzeugs aufweist. Diese Einheit beurteilt, ob ein sich dem Fahrzeug näherndes Objekt eine verdächtige Person ist oder nicht auf Grundlage von einer Information, die es von einem Bewegungssensor zum Überwachen des Außengebiets und/oder des Inneren des Fahrzeugs erhält. Wenn das dem Fahrzeug sich annähernde Objekt als eine verdächtige Person beurteilt wird, erfolgt ein Alarm wie z.B. das Aufleuchten einer Anzeigelampe.

Aus der WO 2008147036 A1 ist eine Einrichtung zur Gefahrenabwendung in einem Fahrzeug bekannt, bei der durch eine Kamera das Gesichtsbild eines Fahrers erfaßt und in einem Speicher einer Elektronik abgespeichert wird. Diese Elektronik weist eine Fahrerauthentifizierungseinheit auf, die eine Gefahrenwarnung ausgibt, wenn sie in dem Fahrzeug eine Person feststellt, die nicht der Fahrer ist.

Aus der US 6 498 970 B2 ist System zur Identifizierung von Personen bekannt, die authorisiert sind ein Fahrzeug zu benutzen. Wenn ein Bild eines Gesichts, das einen Satz einzigartiger biometrischer Merkmale aufweist, in einem Sichtfeld einer an dem Fahrzeug angebrachten Kamera erfasst wird, wird der Satz einzigartiger biometrischer Merkmale des erfassten Bildes mit biometrischen Informationen für eine Vielzahl von Personen verglichen, die berechtigt sind, einen Fahrzeugmechanismus zu aktivieren. Damit wird erkannt, ob das erkannte Gesicht zu einer Person gehört, die berechtigt ist, den Fahrzeugmechanismus zu aktivieren. Der Fahrzeugmechanismus wird nur aktiviert, wenn die Identifikation bestimmt, dass das Gesicht zu einer aus der Vielzahl von Personen gehört, die berechtigt sind, den Fahrzeugmechanismus zu aktivieren. Stellt das System eine nicht authorisierte Person fest, wird eine Warnung aktiviert.

Aus der US 7 570 155 B2 ist ein Sicherheitssystem für ein Fahrzeug bekannt, das eine Positionserfassungseinrichtung zum Erfassen einer Position eines Fahrzeugs und eine Erfassungseinrichtung zum Erfassen eines sich bewegenden Objekts, das sich um das Fahrzeug bewegt, aufweist. Die Erfassungseinrichtung ist in dem Fahrzeug montiert. Weiterhin ist eine Benachrichtigungseinrichtung zum Bereitstellen einer Benachrichtigung, wenn sich ein bewegendes Objekt in einem vorbestimmten Bereich von dem Fahrzeug befindet.

Aus der DE 10 2007 023 140 A1 ist ein Verfahren zur Erkennung und/oder Identifizierung eines Fahrers eines Kraftfahrzeugs und/oder einer Person im Bereich eines Kraftfahrzeugs bekannt , bei dem mittels eines Kamerasystems wenigstens eine Bewegung und/oder wenigstens ein Bewegungsablauf des Fahrers und/oder der Person aufgenommen und zur Erkennung und/oder Identifizierung des Fahrers und/oder der Person seitens einer Bildverarbeitungseinheit analysiert wird.

Aufgabe der Erfindung ist es, ein Verfahren der eingangs genannten Art zu schaffen, durch das Personeninformationen von einer Ausgabeeinheit ausgebbar sind.

Diese Aufgabe wird erfindungsgemäß dadurch gelöst, dass die Aktivierung des Annäherungsmoduls durch Vorliegen eines Stillstandsignals des Kraftfahrzeugs erfolgt, die Umfeldsensorik als Kamerasystem ausgebildet ist, die erfassten Personendaten einem Personenerkennungsmodul zugeführt werden und in Abhängigkeit von den erfaßten Personendaten in einem Speicher im Kraftfahrzeug gespeicherte Bildinformationen durch die Ausgabeeinheit ausgegeben werden, die Informationen über die erkannte Person sind.

Durch dieses Verfahren können in Abhängigkeit von den erfassten Personendaten Informationen über die erkannte Person durch die Ausgabeeinheit ausgegeben werden. Diese Informationen stehen in einem Zusammenhang mit der Person und sind in einem Speicher im Kraftfahrzeug gespeichert. Bei erkannter Person kann durch die Ausgabeeinheit z. B. eine Begrüßung der Person erfolgen.

Kann von dem Annäherungsmodul die sich außerhalb des Kraftfahrzeugs befindliche Person nicht erkannt werden, wird bei Nichtübereinstimmung der erfassten Personendaten mit den gespeicherten Personendaten eine Ausgabe von Informationen durch die Ausgabeeinheit ausgelöst, die sich auf das Nichtbekanntsein der Person und/oder auf nichtpersonenbezogene Informationen beziehen.

Zum Erfassen der sich außerhalb des Kraftfahrzeugs befindlichen Personen anhand deren Personendaten können die erfassten Personendaten durch Annäherungssensoren und/oder durch Kamerasysteme erfasst werden.

Die Annäherungssensoren erfassen das sich Nähern einer Person dem Kraftfahrzeug.

Durch das Kamerasystem wird die sich nähernde Person aufgenommen und die aufgenommenen Bilder mit in einem Speicher des Kraftfahrzeugs gespeicherten Bildern von Personen verglichen.

Kann eine Übereinstimmung der aufgenommenen Bilder mit gespeicherten Bilddaten festgestellt werden, erfolgt eine Ausgabe von Informationen.

Dies können die gespeicherten Bilder, die von dem Kamerasystem aufgenommenen Bilder oder Textausgaben sein.

Die Annäherungssensoren sind vorzugsweise Ultraschallsensoren.

Die Bildinformation kann als Bilddarstellung, aber auch als Textausgabe ausgegeben werden.

Die Bildinformationen werden vorzugsweise auf einem Display ausgegeben, das das Display eines frei programmierbaren Kombinationsinstruments des Kraftfahrzeugs sein kann.

Bei Nichtbekanntsein der sich dem Kraftfahrzeug nähernden Person kann die Bildinformation eine Warn- und/oder Alarminformation sein.

Damit wird eine Diebstahl- oder Vandalismuswarnung erzeugt.

Die Ausgabe der auszugebenden Informationen kann temporär nur für eine bestimmte Zeit erfolgen.

Werden die Bildinformationen bis zur Auslösung neuer durch die Ausgabeeinheit auszugebender Informationen als Bildschirmschoner ausgegeben, so wird der Effekt einer schwarzen, billig wirkenden Oberfläche im Kraftfahrzeug vermieden.

Es ist aber auch möglich, dass dann, wenn keine durch das Annäherungsmodul ausgelöste Informationen vorliegen, durch das Display auch andere Anzeigeinhalte dargestellt werden können, wie z.B. Werbung oder Informationen über das Kraftfahrzeug, über den aktuellen Standort des Kraftfahrzeugs oder die Uhrzeit.

Die in der Speichereinheit des Kraftfahrzeugs zu speichernden Personendaten können mittels einer Eingabeeinheit in einen Speicher eingebbar und im Speicher für die Personenerkennung speicherbar sein.

Es ist aber auch möglich, die Personendaten extern, z. B. mittels eines Personalcomputers, zu erstellen und dann auf den Speicher zu überspielen.

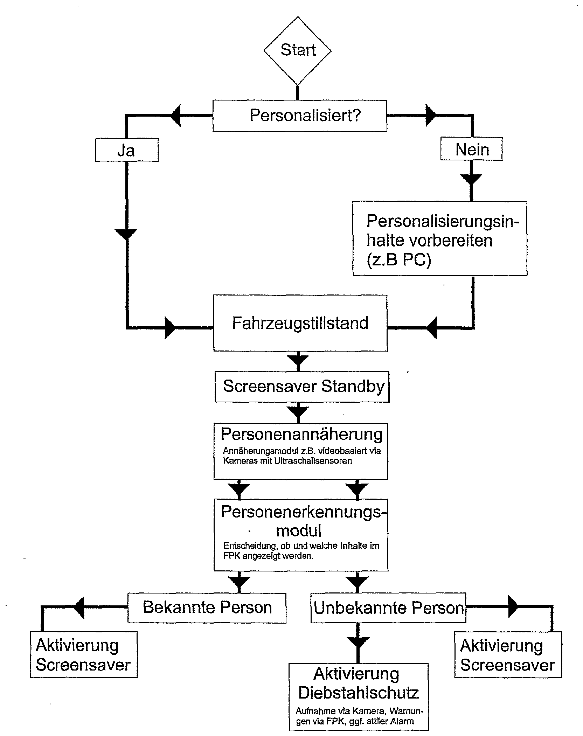

Ein Ausführungsbeispiel der Erfindung ist in der Zeichnung dargestellt und wird im Folgenden näher beschrieben. Die einzige Figur der Zeichnung zeigt ein Ablaufdiagramm eines Verfahrens zur Ausgabe von Informationen.

Nach einem Start eines Informationssystems können mittels einer Eingabeeinheit Personendaten in einen Speicher des Kraftfahrzeugs eingegeben werden.

Nach Eingabe der Personendaten oder bei Nichteingabe von Personendaten bleibt das Informationssystem bei fahrendem Kraftfahrzeug zunächst inaktiv.

Kommt es zu einem Fahrzeugstillstand, wird zunächst ein Bildschirmschoner auf einem Display im Fahrgastraum des Kraftfahrzeugs auf Standby geschaltet.

Weiterhin erfolgt eine Aktivierung des Annäherungsmoduls, das u. a. ein Kamerasystem aufweist, durch das ein Sich-dem-Kraftfahrzeug-Annähern von Personen erkannt wird.

Diese Personen werden durch das Kamerasystem aufgenommen und die dabei erzeugten Personendaten einem Personenerkennungsmodul zugeführt.

Durch das Personenerkennungsmodul erfolgt eine Überprüfung, ob die erfassten Personendaten mit in dem Speicher gespeicherten Personendaten übereinstimmen und somit die sich dem Kraftfahrzeug annähernde Person erkannt wird.

Wird in dem Personenerkennungsmodul erkannt, dass die sich dem Kraftfahrzeug annähernde Person eine bekannte Person ist, erfolgt eine Aktivierung des Bildschirmschoners des Displays, wobei der Bildschirmschoner eine Ausgabe von Informationen enthält, die sich auf die sich dem Kraftfahrzeug annähernde Person beziehen.

Dies kann z. B. eine auf die Person bezogene Begrüßung mit Namensnennung sein, die als Text durch den Bildschirmschoner dargestellt wird und/oder als Sprachausgabe ausgegeben wird.

Erkennt das Personenerkennungsmodul die sich dem Kraftfahrzeug annähernde Person nicht als bekannte, sondern als unbekannte Person, da keine entsprechenden Personendaten gespeichert sind, erfolgt eine Aktivierung des Bildschirmschoners des Displays mit einer Ausgabe der Information, dass diese Person unbekannt ist. Weiterhin kann diese Information auch eine Warn- und Alarminformation beinhalten.

Die von dem Kamerasystem aufgenommenen Personendaten sind Bilddaten, die zumindest für eine bestimmte Zeit gespeichert werden.

Sollte die sich dem Kraftfahrzeug annähernde Person Beschädigungen an dem Kraftfahrzeug begangen haben oder sogar das Kraftfahrzeug gestohlen haben, können später die gespeicherten Bilddaten bei der Ermittlung und Identifizierung dieser Person herangezogen werden.

Sobald der Fahrbetrieb des Kraftfahrzeugs wieder aufgenommen wird, wird der Bildschirmschoner auf dem Display wieder auf Standby geschaltet.

## Patentansprüche

1. Verfahren zur Ausgabe von Informationen durch eine Ausgabeeinheit im Fahrgastraum eines Kraftfahrzeugs in Abhängigkeit von erfassbaren Personendaten, wobei nach einer Aktivierung eines Annäherungsmoduls eine Personenerkennung ausgelöst wird, bei der Personendaten einer sich außerhalb des Kraftfahrzeugs befindlichen Person durch eine Umfeldsensorik erfasst und mit gespeicherten Personendaten verglichen werden, und dass bei Übereinstimmung der erfassten Personendaten mit gespeicherten Personendaten eine Ausgabe von Bildinformationen durch die Ausgabeeinheit ausgelöst wird, die sich auf die Person beziehen,
**dadurch gekennzeichnet, dass** die Aktivierung des Annäherungsmoduls durch Vorliegen eines Stillstandsignals des Kraftfahrzeugs erfolgt, die Umfeldsensorik als Kamerasystem ausgebildet ist, die erfassten Personendaten einem Personenerkennungsmodul zugeführt werden und in Abhängigkeit von den erfaßten Personendaten in einem Speicher im Kraftfahrzeug gespeicherte Bildinformationen durch die Ausgabeeinheit ausgegeben werden, die Informationen über die erkannte Person sind.

2. Verfahren nach Anspruch 1, **dadurch gekennzeichnet, dass** bei Nichtübereinstimmung der erfassten Personendaten mit den gespeicherten Personendaten eine Ausgabe von Informationen durch die Ausgabeeinheit ausgelöst wird, die sich auf das Nichtbekanntsein der Person und/oder auf nichtpersonenbezogene Informationen beziehen.

3. Verfahren nach einem der vorhergehenden Ansprüche, **dadurch gekennzeichnet, dass** die Ausgabe von Bildinformationen durch die Ausgabeeinheit Bilddarstellungen und/oder Textausgaben sind.

4. Verfahren nach Anspruch 3, **dadurch gekennzeichnet, dass** die Bildinformationen auf einem Display ausgegeben werden.

5. Verfahren nach einem der Ansprüche 3 bis 4, **dadurch gekennzeichnet, dass** bei Nichtbekanntsein der sich dem Kraftfahrzeug nähernden Person die Bildinformation eine Warn- und/oder Alarminformation ist.

6. Verfahren nach einem der vorhergehenden Ansprüche, **dadurch gekennzeichnet, dass** mittels einer Eingabeeinheit Personendaten in einen Speicher eingebbar und im Speicher für die Personenerkennung speicherbar sind.

7. Verfahren nach einem der vorhergehenden Ansprüche, **dadurch gekennzeichnet, dass** die Ausgabe der auszugebenden Informationen temporär nur für eine bestimmte Zeit erfolgt.

8. Verfahren nach Anspruch 7, **dadurch gekennzeichnet, dass** die Bildinformationen bis zur Auslösung neuer durch die Ausgabeeinheit auszugebender Informationen als Bildschirmschoner ausgegeben werden.

9. Verfahren nach Anspruch 7, **dadurch gekennzeichnet, dass** andere Anzeigeinhalte dargestellt werden, wenn keine durch das Annäherungsmodul ausgelöste Informationen vorliegen.

## Claims

1. Method for the output of information by an output unit in the passenger compartment of a motor vehicle on the basis of capturable personal data, wherein an activation of an approach module is followed by initiation of a person recognition, in which personal data of a person who is outside the motor vehicle are captured by an ambient sensor system and are compared with stored personal data, and in that if the captured personal data match stored personal data then an output of image information relating to the person by the output unit is initiated,
**characterized in that** the approach module is activated by the presence of a standstill signal of the motor vehicle, the ambient sensor system is in the form of a camera system, the captured personal data are supplied to a person recognition module and the captured personal data are taken as a basis for the output unit to output image information stored in a memory in the motor vehicle, which is information about the recognized person.

2. Method according to Claim 1, **characterized in that** if the captured personal data do not match the stored personal data then an output of information relating to the person not being known and/or to non-personal information by the output unit is initiated.

3. Method according to either of the preceding claims, **characterized in that** the output of image information by the output unit is image representations and/or text outputs.

4. Method according to Claim 3, **characterized in that** the image information is output on a display.

5. Method according to either of Claims 3 and 4, **characterized in that** if the person approaching the motor vehicle is not known then the image information is warning and/or alarm information.

6. Method according to one of the preceding claims, **characterized in that** an input unit can be used to input personal data into a memory and to store them in the memory for the person recognition.

7. Method according to one of the preceding claims, **characterized in that** the information to be output is output temporarily only for a specific time.

8. Method according to Claim 7, **characterized in that** the image information is output as a screensaver until new information to be output by the output unit is initiated.

9. Method according to Claim 7, **characterized in that** other display content is presented if there is no information initiated by the approach module available.

## Revendications

1. Procédé de sortie d'informations par une unité de sortie dans l'habitacle d'un véhicule automobile en fonction de données personnelles pouvant être acquises, une reconnaissance de personne étant déclenchée, après activation d'un module d'approche, lors de laquelle des données personnelles d'une personne qui se trouve à l'extérieur du véhicule automobile sont acquises par un système de capteurs d'environnement et comparées à des données personnelles en mémoire et, si les données personnelles acquises correspondent à des données personnelles en mémoire, une sortie d'informations d'image qui concernent la personne étant déclenchée par l'unité de sortie, **caractérisé en ce que** l'activation du module d'approche est effectuée par la présence d'un signal d'arrêt du véhicule automobile, le système de capteurs d'environnement est conçu comme un système de caméra, les données personnelles acquises sont fournies à un module de reconnaissance de personne et des informations d'image, qui sont mémorisées dans une mémoire du véhicule automobile et qui sont des informations sur la personne reconnue, sont fournies par l'unité de sortie en fonction des données personnelles acquises.

2. Procédé selon la revendication 1, **caractérisé en ce que**, si les données personnelles acquises ne correspondent pas aux données personnelles en mémoire, l'unité de sortie déclenche la sortie d'informations qui concernent la non-reconnaissance de la personne et/ou des informations non liées à la personne.

3. Procédé selon l'une des revendications précédentes, **caractérisé en ce que** les informations d'image fournies par l'unité de sortie sont des représentations d'image et/ou des sorties de texte.

4. Procédé selon la revendication 3, **caractérisé en ce que** les informations d'image sont fournies à un dispositif d'affichage.

5. Procédé selon l'une des revendications 3 et 4, **caractérisé en ce que**, si la personne qui s'approche du véhicule automobile n'est pas reconnue, l'information d'image est une information d'avertissement et/ou d'alarme.

6. Procédé selon l'une des revendications précédentes, **caractérisé en ce que** des données personnelles peuvent être saisies dans une mémoire au moyen d'une unité d'entrée et peuvent être mémorisées dans la mémoire destinée à l'identification de personnes.

7. Procédé selon l'une des revendications précédentes, **caractérisé en ce que** la sortie d'informations à fournir n'est effectuée temporairement que pendant un temps déterminé.

8. Procédé selon la revendication 7, **caractérisé en ce que** les informations d'image sont fournies en tant qu'économiseur d'écran jusqu'à ce que de nouvelles informations que doit fournir l'unité de sortie soient déclenchées.

9. Procédé selon la revendication 7, **caractérisé en ce que** d'autres contenus d'affichage sont représentés si aucune information n'est déclenchée par le module d'approche.
